(19) **Europäisches Patentamt / European Patent Office / Office européen des brevets**

(11) **EP 2 873 275 B1**

(12) **EUROPEAN PATENT SPECIFICATION**

(45) Date of publication and mention
of the grant of the patent:
**12.12.2018 Bulletin 2018/50**

(21) Application number: **13819796.7**

(22) Date of filing: **05.06.2013**

(51) Int Cl.:
***H04W 48/16*** (2009.01)

(86) International application number:
**PCT/US2013/044218**

(87) International publication number:
**WO 2014/014567 (23.01.2014 Gazette 2014/04)**

(54) **RAPID SCANNING FOR FAST INITIAL LINK SETUP**

SCHNELLE ABTASTUNG FÜR SCHNELLEN ANFÄNGLICHEN VERBINDUNGSAUFBAU

BALAYAGE RAPIDE POUR ÉTABLISSEMENT DE LIAISON INITIALE RAPIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.07.2012 US 201261671768 P
19.10.2012 US 201213655751**

(43) Date of publication of application:
**20.05.2015 Bulletin 2015/21**

(73) Proprietor: **Intel Corporation
Santa Clara, CA 95054 (US)**

(72) Inventors:
• **SEGEV, Jonathan
Tel Mond M 40600 (IL)**
• **STEPHENS, Adrian P.
Cambridge CB4 8TA (GB)**

(74) Representative: **HGF Limited
Fountain Precinct
Balm Green
Sheffield S1 2JA (GB)**

(56) References cited:
**WO-A1-2008/026810    US-A1- 2007 097 940
US-A1- 2007 286 143    US-A1- 2009 268 711
US-A1- 2011 045 771    US-B2- 8 135 400**

**Description**

TECHNICAL FIELD

The present invention pertains to wireless communications, more particularly, to initial link setup.

BACKGROUND

An ongoing problem in devices that connect to wireless networks is the time it takes to locate an appropriate network and establish a connection thereto. This is particularly true if there are a lot of channels to scan through as identifying a network and establishing a connection thereto can take a substantial amount of time. WO 2008/026810 A1 provides certain disclosures for scanning an access point during a station's handoff procedure in a wireless communication system. US 2011/045771 A1 provides certain disclosures for mitigating effects of interferers while performing a conditional device scan. US2007/097940 A1 and US2009/268711 A1 provide disclosures in the field of preliminary channel scanning.

BRIEF DESCRIPTION OF THE DRAWINGS

FIG. 1 illustrates an existing initial link establishment procedure according to an 802.11 standard.
FIG. 2 illustrates an initial link establishment procedure according to some embodiments.
FIG. 3 illustrates message structure according to some embodiments.
FIG. 4 illustrates message structure according to some embodiments.
FIG. 5 illustrates an initial link establishment procedure according to some embodiments.
FIG. 6 illustrates an initial link establishment procedure according to some embodiments.
FIG. 7 illustrates a system block diagram according to some embodiments.

DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. Embodiments set forth in the claims encompass all available equivalents of those claims.

Various modifications to the embodiments will be readily apparent to those skilled in the art, and the generic principles defined herein may be applied to other embodiments and applications without departing from the scope of the invention. Moreover, in the following description, numerous details are set forth for the purpose of explanation. However, one of ordinary skill in the art will realize that embodiments of the invention may be practiced without the use of these specific details. In other instances, well-known structures and processes are not shown in block diagram form in order not to obscure the description of the embodiments of the invention with unnecessary detail. Thus, the present disclosure is not intended to be limited to the embodiments shown, but is to be accorded the widest scope consistent with the principles and features disclosed herein.

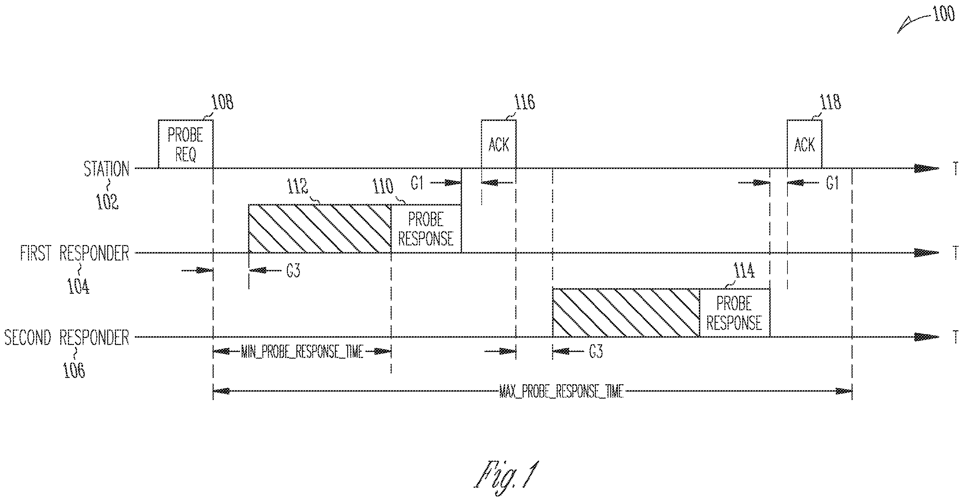

FIG. 1 illustrates an existing initial link establishment procedure 100 according to an 802.11 standard. In this procedure a station (STA), illustrated by 102 is trying to establish a link with an access point or other entity such as first responder 104 or second responder 106. First responder 104 and second responder 106 can be responders such as other stations (STAs) or Access Points (APs). The initial link establishment procedure 100 is an active scan procedure. According to the initial link establishment procedure in FIG. 1, station 102 sends a probe request (PR) message 108 to determine the identity of any access points or other entities. PR message can be an IEEE Std 802.11 Probe Request frame, but embodiments described herein are not so limited. Station 102 will wait a minimum of Min_Probe_Response_Time to receive a Probe Response (PRR) message, such as PRR message 110, before determining that no access points exist. Min_Probe_Response_Time provides for processing of the message content and for any channel access arbitration delay. This results in typical values for Min_Probe_Response Time from about 2 ms to about 5 ms.

The minimum time, according to the 802.11 specifications, that a PRR message, such as PRR message 110, will be returned is a Distributed Coordination Function (DCF) Interframe Space (DIFS) time. This is defined in IEEE Std 802.11 as a Short Interframe Sapce (SIFS) plus two times a Slot Time (ST). Depending on the exact 802.11 specification, DIFS can range from 28 μs to 50 μs, ST can range from 9 μs to 20 μs and SIFS ranges from 10 μs to 16 μs.

Depending on various factors such as product specific tradeoffs between time delay/power consumption and probability of detecting all responders (e.g. STAs, APs), bandwidth, etc., the station will need to wait some period of time to receive a PRR message, such as PRR message 110. In FIG. 1, this is illustrated by uncertainty time period 112. Assuming a PRR message, such as PRR message 110, is received within Min_Probe_Response_Time, station 102 will wait Max_Probe_Response_Time for any additional PRR messages, such as PRR message 114. Depending on the device and whether a channel is clear, and perhaps other factors, typical values for Max_Probe_Response_Time range from about 10 ms to about 15 ms. This gives the opportunity for any additional responders, such as second responder 106, to identify themselves. In addition, should two responders send PRR messages that collide, it will allow for corrective measures in an attempt to transmit and receive a PRR message correctly. It should be noted that PRR message 110 and PRR message 114 are crafted by first responder 104 and second responder 106, respectively, to respond specifically to PR message 108. In other words, they contain unique information specific to PR message 108.

When a PRR message is received, station 102 will respond with an acknowledgement. This is illustrated in FIG. 1 where acknowledgement 116 is sent in response to PRR message 110 and acknowledgement 118 is sent in response to PRR message 114. According to the specification, acknowledgements to PRR messages are sent after a SIFS time.

The link establishment protocol of FIG. 1, while robust, can result in a long time before a link can be established if many channels need to be scanned before a PRR message is received in response to a PR message. The time to scan idle channels is:

$$AS_{Time} = N_C * (PR_L + Min\_Probe\_Response\_Time)$$

Where: $AS_{Time}$ is the total time to complete the active scan;
$N_C$ is the total number of channels scanned;
$PR_L$ is the time length of the PR message; and
Min_Probe_Response_Time is the time length the station will wait before deciding no message is going to be received.

Using typical values, a full scan of 35 non Dynamic Frequency Selection (DFS) / Transmit Power Control (TPC) channels in Korea will take about 194.4 ms using the 802.11 procedure defined in FIG. 1 while a scan of 23 non DFS/TPC channels in Japan will take about 124.2 ms. In the US, there 20 non DFS/TPC channels which will take about 108ms.

While not illustrated in a figure, 802.11 also provides for a passive scan initial link establishment procedure. In this procedure, a Beacon message is transmitted by a responder, such as responder 104 or 106 of FIG. 1 on a periodic basis. The information in the Beacon message is intended to notify any potential stations (such as station 102 of FIG. 1) that an appropriate access point or other entity exists where a link can be established. A station can then initiate a link in response to the Beacon message. The passive scan procedure is generally slower (i.e., takes more time) than the active scan procedure defined by 802.11, and much slower than embodiments described herein.

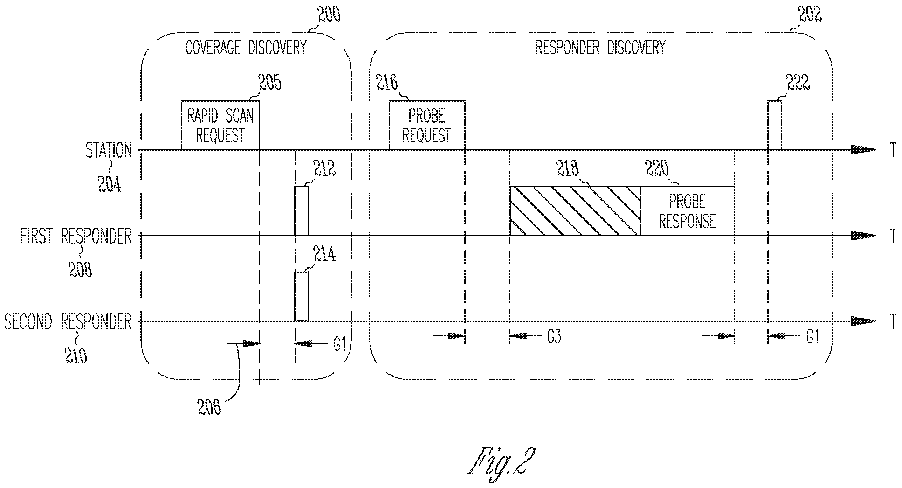

FIG. 2 illustrates an initial link establishment procedure according to some embodiments. In FIG. 2, the initial link establishment procedure is broken down into two main phases. The first phase, illustrated by coverage discovery phase 200 is designed to be completed rapidly. The intent of this phase is to establish whether coverage exists so a link can be established. If no coverage exists, the scan can move to a different channel in a rapid manner. The second phase, illustrated by responder discovery phase 202, is designed to discover the identity of the relevant access point or other entity and/or to establish a link thereto.

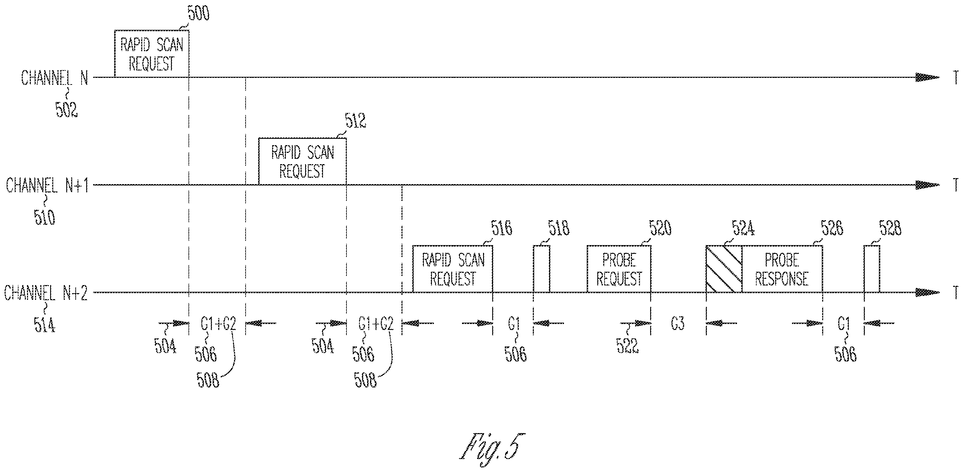

Turning first to coverage discovery phase 200, an example embodiment is illustrated. In this example, station (STA) 204 sends out a Rapid Scan Request (RSR) message 205. Responders receiving the RSR will respond a SIFS time after reception of the RSR message (illustrated in FIG. 2 by G1 time 206). In the example of FIG. 2, first responder 208 and second responder 210 both transmit a RSR Response (RSRR) message (212 and 214, respectively). Detection of one or more RSRR messages indicates existence of coverage and further link establishment procedures can be carried out (such as responder discovery phase 202 of FIG. 2). If, however, no RSRR messages are detected after a SIFS time, station 204 can switch channels and attempt to locate coverage on a new channel (see discussion of FIG. 5).

Detection of one or more RSRR messages can comprise one or more of the following activities, depending on the specific embodiment: 1) Detection of start of energy at an expected time; 2) Detection of an autocorrelation property of a received signal indicating the start of some packet; or 3) correctly decode a complete RSRR or a specific part of it, such as the SIGNAL field, perhaps on a best efforts basis. Both 1 and 2 are very robust in the event of collision, and, as discussed below, represent an aspect of certain embodiments.

Using coverage discovery phase 200 significantly shortens the time to scan idle channels. The time to scan idle channels is defined as:

$$RAS_{Time} \leq N_C * (RSR_L + SIFS + RSRR_L)$$

Where: $RAS_{Time}$ is the total time to complete the rapid active scan;
$N_C$ is the total number of channels scanned;
$RSR_L$ is the time length of the RSR message;
$SIFS$ is the Short Interframe Slot time length; and
$RSRR_L$ is the time length of the RSRR message.

Equality in the above represents an upper bound since reception of the entire RSRR message is not needed to trigger detection. Typically, just the preamble of the RSRR message need be detected to trigger detection. Typical 802.11 values for preamble detection are about 4 μs for 20Mhz and about 8 μs for 10Mhz.

As previously noted, using typical values, a full scan of 35 non DFS/TPC channels in Korea will take about 194.4 msec. in standard 802.11 procedure defined in FIG. 1, while only taking about 9 msec. using the coverage discovery phase 202 of FIG. 2. Numbers for Japan are about 124.2 msec. for FIG. 1 and about 5.75 msec. for coverage discovery phase 202 of FIG. 2. To scan 20 non DFS/TPC channels in the US takes about 4.61 ms. using the coverage discovery phase 202 of FIG. 2 rather than about 108 ms for the standard 802.11 procedure defined in FIG. 1.

In addition to a significant time savings, the power required to do a complete scan are also significantly reduced by the coverage discovery phase 202 of FIG. 2, when idle channels are scanned.

In FIG. 2, both first responder 208 and second responder 210 send RSRR message 212 and 214, respectively. In various embodiments RSRR messages 212 and 214 can contain identical, partially identical, or completely different information, as discussed below. Note that in FIG. 2, both 212 and 214 are detected simultaneously (or at least in an overlapping manner, perhaps due to range differences or equipment processing loads, or some other factor(s)). This, however, is typically not a problem and, indeed, detectability in the presence of collision is one aspect of this embodiment.

In some embodiments, RSR message 205 can contain at least one Organizationally Unique Identifier (OUI) such as a special MAC address or other Unique Identifier that indicates to potential responders that they should only respond if they have certain functionality, adhere to a designated standard (such as 802.11ai, currently a work in progress), and/or have other designated characteristics. In this way, any received RSRR messages will not only indicate existence of coverage but existence of coverage having certain functionality, existence of coverage adhering to a particular standard (or particular version of a standard), and/or other designated characteristics.

Those of skill in the art will recognize that OUIs are only one mechanism to achieve this outcome. Other information in RSR message 205 (such as one or more fields) can also indicate the desired characteristics of responders such that the same effect can be achieved.

Assuming at least one RSRR message is detected, such as RSRR message 212 and/or RSRR message 214, station 204 may continue with responder discovery phase 202 in order to establish a link to an access point or other entity such as first responder 208 and/or second responder 210. In FIG. 2, responder discovery phase 202 can be either an active scan or passive scan responder discovery procedure. Additionally, or alternatively, the selection of a responder discovery phase for use as responder discovery phase 202 can depend on the content of RSRR message 212 and/or RSRR message 214. For example if RSR message 205 contains an OUI or other information indicating that responders with certain characteristics should respond, or if the received RSRR message (e.g. 212 and/or 214) contain identity or other information indicating characteristics of the responder, then station 204 can employ selection criteria to select what responder discovery procedure will be used for phase 202.

In embodiments where no efforts are made to prevent collisions between RSRR messages, best efforts can be used to properly decode any such information. Additionally, or alternatively, various mechanisms to encode the identity or other information indicating characteristics of the responder in a manner that reduces the effect of possible collisions on proper decoding of the encoded information can be utilized. Examples include, but are not limited to, using specific subcarriers of an ODFM signal, presence of energy in the message at specific times, or other mechanisms having the property of orthogonality.

FIG. 2 illustrates responder discovery phase 202 as an active scan responder discovery procedure, such as that illustrated in FIG. 1. A passive scan responder discovery procedure is not illustrated but could be substituted for the active scan procedure that is illustrated. In FIG. 2, responder discovery phase 202 includes station 204 transmitting PR message 216 and, after an uncertain time 218, receiving PRR message 220. Station 204 then sends acknowledgement 222.

In FIG. 2, the timing of responder discovery phase 202 corresponds to the active scan timing of that illustrated in FIG. 1. Thus, station 204 can expect to receive PRR message 220 within Max_Probe_Response_Time. Modifications to a standard active scan procedure are also possible. For example, since station 204 already knows the existence of coverage (through coverage discovery procedure 200), it may make different choices (other than those currently outlined in the 802.11 set of specifications) if Max_Probe_Response_Time passes without reception of a PRR message. Furthermore, responders such as first responder 208 and second responder 210, can tighten (or loosen) timing on their end if desired, sending PRR messages sooner (or later) than outlined in the figures.

Looking at RSR and RSRR messages in more detail, in some embodiments, all responders may transmit identical PLCP Protocol Data Unit (PPDU) frames by transmitting identical PLCP preamble, PLCP header, and identical pre-agreed PLCP Service Data Unit (PSDU) information. The identical transmission from different sources is seen as a collision at the station receiver (e.g. the station that transmitted the RSR). (Incidentally, any other station listening on the channel will also receive RSRR messages. If that station is trying to ascertain existence of coverage, it may, perhaps, do so without even transmitting an RSR message.) However, in some embodiments, only the existence of an RSRR message (and not the details of the information contained therein) is important and the actual decoding of received RSRR messages need not occur. In these type of embodiments detection may be accomplished by processing circuitry such as Clear Channel Assessment (CCA) processing circuitry. When the CCA returns FALSE (the channel indicates as busy), after the appropriate time (such as SIFS time 206 in FIG. 2), the detection is successful.

In other embodiments, mechanisms such as subcarrier (SC) selection, frequency, time and/or collision avoidance techniques can be used to reduce the number of collisions of RSRR messages from multiple responders. In such embodiments, not only the existence but also other information such as identity (e.g. SSID, ESSID), capability, and/or other information may be received in conjunction with the RSRR message. Depending on the length of the RSRR message (shorter messages support the goal of more rapid scanning), the amount of any such additional information may be limited and compressed representations such as obtained using a hash function on identifiers or other compressed representations may be utilized.

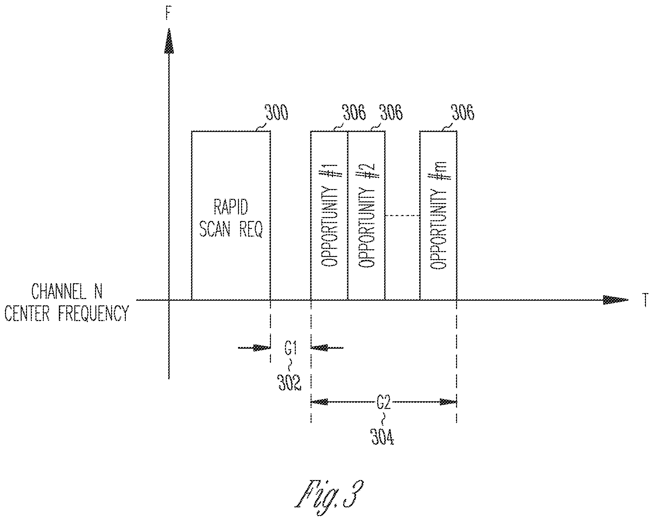

FIG. 3 illustrates more detail of RSR and RSRR messages according to some embodiments. In FIG. 3, an RSR message 300 is transmitted by a station. After a SIFS delay 302, an RSRR opportunity interval 304 exists where responders correctly receiving RSR message 300 may respond. The RSRR opportunity interval 304 can be one or more Orthogonal Frequency Division Multiplexing symbol long.

In FIG. 3, RSRR opportunity interval 304 is divided into multiple opportunity slots 306. A responder may select an opportunity slot 306 to respond using a selection function. The size of RSRR opportunity interval 304 and the number of opportunity slots 306 may be defined by a pre-agreement between a station and responder (such as by a standard) or indicated in the RSR. The selection of a specific slot 306 from within the slot range 304 may be done using a selection function, which is responsible at distributing the responder attempts over the opportunity interval 304. The selection function may be completely defined by the standard or may have some of its parameters provided by the RSR or pre-agreed by the responders. In one example, the selected opportunity slot range may be defined by a standard or otherwise pre-agreed between a station and responder. In another example, the selected opportunity slot range may be defined within RSR message 300 or derived from information contained within RSR message 300. In another example, the selected opportunity slot range may be based on a pre-agreed (or standard defined) selection function (such as a hash function). In a still further example, the selected opportunity slot range may be based on a function contained within RSR message 300 or derived from information contained within RSR message 300. In a further example, the selected opportunity slot range (or selection function) may be based on a responder identity or responder characteristic (such as functionality, particular standard adherence, etc.). In yet another example, the selected opportunity slot range (or selection function) may be based on coordination among multiple responders. In still a further example, the selected opportunity slot (or selection function) may be based on management and control messages sent over a shared channel.

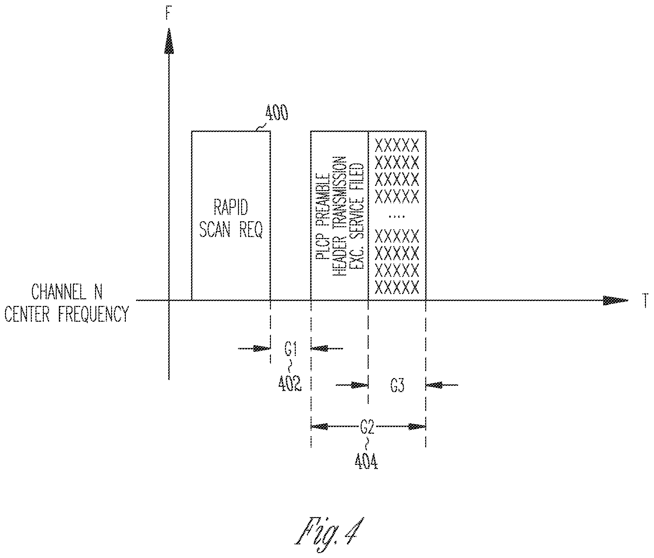

FIG. 4 illustrates more detail of RSR and RSRR messages according to some embodiments. In FIG. 4, an RSR message 400 is transmitted by a station. After a SIFS delay 402, an RSRR opportunity interval 404 exists where responders correctly receiving RSR message 400 may respond. RSRR opportunity interval 404 can extend for about a header period (such as PLCP Preamble/Header) and (optionally) one or more encoded symbols (G3 in FIG. 4).

In FIG. 4, RSRR messages using spreading techniques, such as CDMA may be sent during RSRR opportunity interval 404. In some embodiments, RSRR messages may be based (in whole or part) on shared properties of the RSRR messages among the different responders. In one example, responders may transmit identical PLCP preamble and/or identical PLCP header information while selecting one code from multiple orthogonal codes based on some type of criteria or using some type of selection function. The selection of a subset of OFDM SC is performed such that each code selects different set of OFDM SC from the available set. In one example, the responder selects one of the codes based on selection function such as a hash function e.g. derived from its SSID or BSSID and transmits on the associated SCs. The use of a hash function reduces and normalizes the probability distribution of collisions.

In one example, the selected code may be defined by a standard or otherwise pre-agreed between a station and responder. In another example, the selected code may be defined within RSR message 400 or derived from information contained within RSR message 400. In another example, the selected code may be based on a pre-agreed (or standard defined) selection function (such as a hash function). In a still further example, the selected code may be based on a function contained within RSR message 400 or derived from information contained within RSR message 400. In a further example, the selected code (or selection function) may be based on a responder identity or responder characteristic (such as functionality, particular standard adherence, etc.) or combination of these. In yet another example, the selected code (or selection function) may be based on coordination among multiple responders. In still a further example, the selected code (or selection function) may be based on some out of band communication.

In an embodiment, if the station knows how the code is selected, identification of which code is used during reception of an RSRR message may identify to the station various characteristics, parameters and/or functionality used to select the code such as responder identity, responder functionality and/or characteristics, etc. This can reduce the need to transmit specific information covering this information in the RSRR message itself and indicate a high probability of certain characteristics such as SSID, BSSID, certain functionality, etc.

The multiple transmission sources of the PLCP preamble and PLCP header (identical among responders or not) enable the station to tune its Automatic Gain Control (AGC) to the sum of the signals preventing signal compression and clipping and enables the tuning of the AGC to such a level that will leave dynamic range for the data part of the PPDU frame, Automatic Frequency Control (AFC) and other receive parameters over time frequency shared transmission domain. A shared modulation and convolution coding may be used throughout the PLCP header and orthogonal codes transmission part to enable this. Fixed identical modulation among responder repetition coding may also be used.

FIG. 5 illustrates a responder discovery procedure according to some embodiments. In FIG. 5, a station, such as station 204 of FIG. 2 or other station, sends out an RSR message 500 over frequency channel N 502. The station will wait a period of time (RSRR wait time 504) for a RSRR message to be received. Iii FIG. 5, RSRR wait time 504 is equal to a SIFS time 506 plus a RSRR opportunity interval 508. In FIG. 5, RSRR opportunity interval 508 can extend for the times illustrated in FIG. 3 or FIG. 4 by transmission accuracy of the responder, for example by 10% of a ST, which is 0.9 $\mu$s for ODFM 20Mhz PHY.

Assuming no RSRR message is received during RSRR wait time 504, the station may switch frequencies and attempt another scan. In FIG. 5, the station switches to frequency channel N+1 510 and transmits a RSR message 512. If no RSRR message is received during RSRR wait time 504, the receiver will again switch frequency channels and attempt another scan.

In FIG. 5, no RSRR message was received on frequency channel N+1 and the receiver switches to frequency channel N+2 514, transmits RSR message 516 and begins waiting the appropriate amount of time. After SIFS time 506, RSRR message 518 is received. At this point, the receiver knows coverage exists on channel N+2 and, depending on whether RSRR detection only was possible or correctly received RSRR was available and details of RSRR message 518, perhaps additional information (e.g. identity, etc.) about one or possibly more responders. The station can then engage in an responder discovery procedure such as an active scan procedure or a passive scan procedure. The responder discovery procedures may also discover various responder characteristics as discussed previously.

In FIG. 5, the receiver enters into an active scan procedure by transmitting PR message 520. After a DIPS time interval 522 and some time uncertainty interval 524 later, PRR message 526 is received and, after SIFS interval 506, the receiver transmits acknowledgement 528.

Although an active scan procedure is illustrated in FIG. 5, such could have been replaced by a passive scan procedure, such as those discussed above.

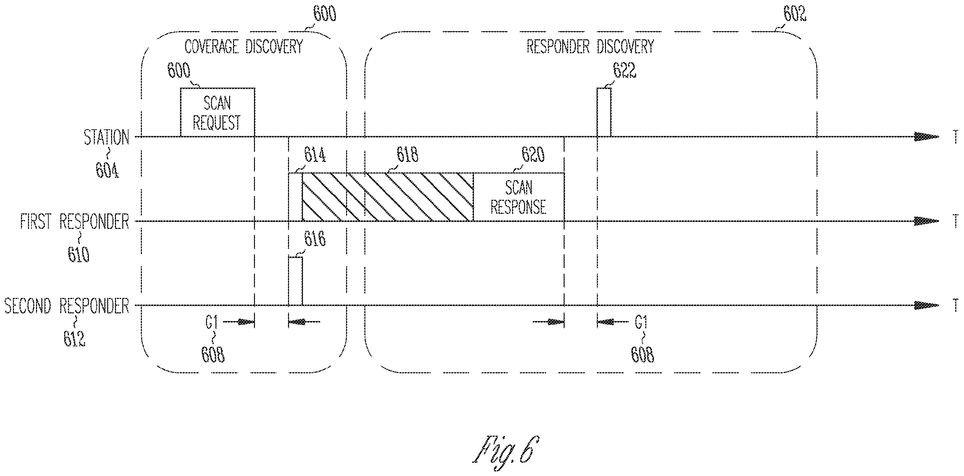

FIG. 6 illustrates a responder discovery procedure according to some embodiments. In FIG. 6, two phases are illustrated. Coverage discovery phase 600 is followed by responder discovery phase 602. In FIG. 6, station 604 sends out scan request (SR) message 606. SR message 606 can be a RSR type message (such as those discussed herein) or can be a PR message (such as those discussed in conjunction with FIG. 1) or can be some modified version of either or both of them or can be an entirely new message type. SR message 606 is designed to elicit response from any responders to determine existence (and perhaps other information) of coverage on the scanned channel.

After SIFS time 608 one or more SR Response (SRR) messages are received from one or more responders, if they exist on the scanned channel. In FIG. 6, first responder 610 and second responder 612 both respond with SRR message 614 and SRR message 616, respectively. SRR messages, such as SRR 614 and 616 can be RSRR messages such as those described in conjunction with FIG. 3 or FIG. 4. SRR messages, such as SRR 614 and 616 can also be the existing ACK message of 802.11-2012.

Once at least one SRR message is detected, station 604 knows the existence of coverage and, perhaps, additional information (e.g. identity, capability, etc.) depending on the form and content of any received SRR messages. In the embodiment of FIG. 6, rather than use one of the active scan procedures or passive scan procedures previously described, a modified scan procedure can be used for responder discovery phase 602. In FIG. 6, the illustrated modified scan procedure comprises the station receiving, after an uncertainty period 618, PRik message 620. PRR message 620 may be a PRR message such as those described in conjunction with FIG. 1 or FIG. 2, some modification thereof, or an entirely new message type. After a SIFS delay 608, station 604 sends acknowledgment 622.

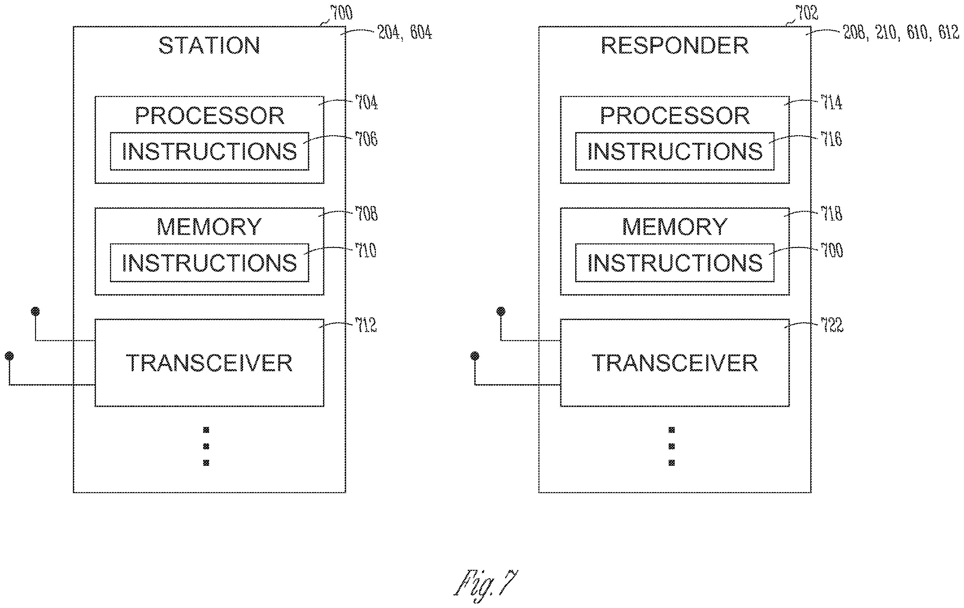

FIG. 7 illustrates an example system block diagrams according to some embodiments. FIG. 7 illustrates a block diagram of a station 700 (such as station 204 or station 604) and a block diagram of a responder 702 (such as responder 208, 210, 610 or 612). Responder 702 can be an access point (AP), a soft AP or other entity that can provide network access/coverage or provide point-to-point communication for station 700.

Station 700 may include processor 704, memory 706, transceiver 712, instructions 706, 710, and possibly other components (not shown). Responder 702 may include processor 714, memory 716, transceiver 722, instructions 716, 720 and possibly other components (not shown). While similar from a block diagram standpoint, it will be apparent to those of skill in the art that the configuration and details of operation of station 700 and responder 702 may be similar, or substantially different, depending on the exact device and role.

The processor 704 and processor 714 each comprise one or more central processing units (CPUs), graphics processing units (GPUs), accelerated processing units (APUs), or various combinations thereof. The processor 704 provides processing and control functionalities for station 700 and processor 714 provides processing and control functionalities for responder 702.

Memory 708 and memory 718 each comprise one or more transient and/or static memory units configured to store instructions and data for station 700 and responder 702, respectively. Transceiver 712 and transceiver 722 each comprise one or more transceivers including, for an appropriate station or responder, a multiple-input and multiple-output (MIMO) antenna to support MIMO communications. For station 700, transceiver 712 receives transmissions and transmits transmissions, among other things, from and to responder 702 respectively. For responder 702, the transceiver 714 receives transmissions from and transmits data back to station 700 (and perhaps other entities as well).

The instructions 706, 710 comprise one or more sets of instructions or software executed on a computing device (or machine) to cause such computing device (or machine) to perform any of the methodologies discussed herein. The instructions 706, 710 (also referred to as computer- or machine-executable instructions) may reside, completely or at least partially, within processor 704 and/or the memory 708 during execution thereof by station 700. While instructions 706 and 710 are illustrated as separate, they can be part of the same whole. The processor 704 and memory 708 also comprise machine-readable media.

The instructions 716, 720 comprise one or more sets of instructions or software executed on a computing device (or machine) to cause such computing device (or machine) to perform any of the methodologies discussed herein. The instructions 716, 720 (also referred to as computer- or machine-executable instructions) may reside, completely or at least partially, within processor 714 and/or the memory 718 during execution thereof by responder 702. While instructions 716 and 720 are illustrated as separate, they can be part of the same whole. The processor 714 and memory 718 also comprise machine-readable media.

In FIG. 7, processing and control functionalities are illustrated as being provided by processor 704, 714 along with associated instructions 706, 710, 716, 720. However, these are only examples of processing circuitry that comprise programmable logic or circuitry (e.g., as encompassed within a general-purpose processor or other programmable processor) that is temporarily configured by software or firmware to perform certain operations. In various embodiments, processing circuitry may comprise dedicated circuitry or logic that is permanently configured (e.g., within a special-purpose processor, application specific integrated circuit (ASIC), or array) to perform certain operations. It will be appreciated that a decision to implement a processing circuitry mechanically, in dedicated and permanently configured circuitry, or in temporarily configured circuitry (e.g., configured by software) may be driven by, for example, cost, time, energy-usage, package size, or other considerations.

Accordingly, the term "processing circuitry" should be understood to encompass a tangible entity, be that an entity that is physically constructed, permanently configured (e.g., hardwired), or temporarily configured (e.g., programmed) to operate in a certain manner or to perform certain operations described herein.

The term "computer readable medium," "machine-readable medium" and the like should be taken to include a single medium or multiple media (e.g., a centralized or distributed database, and/or associated caches and servers) that store the one or more sets of instructions. The terms shall also be taken to include any medium that is capable of storing, encoding or carrying a set of instructions for execution by the machine and that cause the machine to perform any one or more of the methodologies of the present disclosure. The term "computer readable medium," "machine-readable medium" shall accordingly be taken to include both "computer storage medium," "machine storage medium" and the like (tangible sources including, solid-state memories, optical and magnetic media, or other tangible devices and carriers but excluding signals per se, carrier waves and other intangible sources) and "computer communication medium," "machine communication medium" and the like (intangible sources including, signals per se, carrier wave signals and the like).

It will be appreciated that, for clarity purposes, the above description describes some embodiments with reference to different functional units or processors. However, it will be apparent that any suitable distribution of functionality between different functional units, processors or domains may be used without detracting from embodiments of the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Although the present invention has been described in connection with some embodiments, it is not intended to be limited to the specific form set forth herein. One skilled in the art would recognize that various features of the described embodiments may be combined in accordance with the invention. Moreover, it will be appreciated that various modifications and alterations may be made by those skilled in the art without departing from the scope of the invention, which is defined by the appended claims

**Claims**

1. A method to establish an initial link to an Access Point comprising: transmitting (205), by a station, a Scan Request, SR, message; detecting, by the station, a SR Response, SRR, message (212, 214), the reception of which indicates the existence of an appropriate responder,
   wherein the SRR message comprises identity or other information indicating characteristics of the responder;
   upon detecting reception of the SRR message, the station entering into a responder discovery protocol selected from the group consisting of an active scan responder discovery protocol and a passive scan responder discovery protocol,
   wherein the selection of a responder discovery protocol depends on the content of the SRR message.

2. The method of claim 1 wherein the SR message is a Rapid Scan Request, RSR, message and the SRR is a RSR Response, RSRR, message.

3. The method of claim 1 or 2 wherein the responder discovery protocol is the active scan responder discovery protocol further comprising:

   transmitting, by the station, a Probe Request, PR, message;
   receiving, by the station, a Probe Response, PRR, message transmitted by the responder; and
   transmitting, by the station, a PRRAcknowledgement.

4. The method of claim 1 wherein the SR message is a Probe Request, PR, message and wherein the SRR message is an ACK message and wherein the responder discovery protocol is the active scan responder discovery protocol further comprising:

   receiving, by the station, a Probe Response, PRR, message transmitted by the responder; and
   transmitting, by the station, a PRR Acknowledgment.

5. The method of claim 1, 2, 3 or 4 wherein the SRR message is transmitted by the responder only if the responder matches characteristics determined by a Organizationally Unique Identifier, OUI, provided in the SR message.

6. The method of claim 1, 2, 3, 4, or 5 wherein the SRR message is transmitted by the responder using a coding selection scheme based on the identity of the responder.

7. The method of claim 1, 2, 3, 4, 5, or 6 wherein the coding scheme is selected from the group consisting of a predetermined coding scheme and a coding scheme provided to the responder by the station.

8. The method of claim 1, 2, 3, 4, 5, 6, or 7 wherein the SRR message is transmitted by the responder in no more than about a Short Interframe Slot, SIFS,time frame from reception of the SR message by the responder.

9. A wireless communication device (700) comprising:

   processing circuitry (704) to detect a responder (208, 210: 610, 612: 702) adapted to provide access to a network, the processing circuitry (704) arranged to:

   transmit a Scan Request, SR, message;
   detect a SR Reply, SRR, message,
   wherein the SRR message comprises identity or other information

   indicating characteristics of the responder; and, upon detection of the SRR message, select a responder discovery protocol by receiving

a link initiation protocol message selected from the group consisting of a message sent by the responder as part of an active scan link initiation protocol and a message sent by the responder as part of a passive scan link initiation protocol,

wherein the selection of a responder discovery protocol depends on the content of the SRR message.

10. The device of claim 9 wherein the SRR message comprises a PLCP preamble and a PLCP header, each of which is common to all responders, and a unique payload encoded using orthogonal codes based on a scheme selected from a group consisting of a predefined orthogonal code selection scheme and an orthogonal code selection scheme transmitted as part of the SR message.

11. The device of claim 9 or 10 wherein the processing circuitry configured to detect the SRR message comprises a time division reception scheme to provide multiple choices for the responder transmit the SRR message, the time division reception scheme being selected from the group consisting of a predetermined time division reception scheme and a time division reception scheme provided to the responder by the station.

12. The device of claim 9 or 10 wherein the SRR message is transmitted by the responder using an opportunity selection scheme based on the identity of the responder, the opportunity selection scheme being selected from the group consisting of a predetermined opportunity selection scheme and an opportunity selection scheme provided to the responder by the station.

13. A computer storage medium having executable instructions embodied thereon that, when executed, configure User Equipment, UE (700), to:

send a Scan Request, SR, message; and
detect a SR Reply, SRR, message, the SRR message identifying at least the existence of a responder,

wherein the SRR message comprises identity or other information indicating characteristics of the responder; and, upon detecting the SRR message, select a responder discovery protocol by detecting a link initiation protocol message transmitted by the responder as part of an active scan responder discovery protocol or a passive scan responder discovery protocol,
wherein the selection of a responder discovery protocol depends on the content of the SRR message.


**Patentansprüche**

1. Verfahren zum Herstellen einer anfänglichen Verbindung zu einem Zugangspunkt, das Folgendes umfasst:

Übertragen einer Scananforderungs(SR)-Nachricht (205) durch eine Station;
Detektieren durch die Station einer SR-Antwort(SRR)-Nachricht (212, 214), deren Empfang die Existenz eines angemessenen Antwortgebers anzeigt,
wobei die SRR-Nachricht Identitäts- oder andere Informationen, die Eigenschaften des Antwortgebers anzeigen, umfasst;
nach Detektieren eines Empfangs der SRR-Nachricht Eintreten der Station in ein Antwortgeberentdeckungsprotokoll, das aus der Gruppe ausgewählt ist, die aus einem aktiven Scanantwortgeberentdeckungsprotokoll und einem passiven Scanantwortgeberentdeckungsprotokoll besteht,
wobei die Auswahl eines Antwortgeberentdeckungsprotokolls vom Inhalt der SRR-Nachricht abhängig ist.

2. Verfahren nach Anspruch 1, wobei die SR-Nachricht eine schnelle Scananforderungs(RSR)-Nachricht und die SRR eine RSR-Antwort-(RSRR)-Nachricht ist.

3. Verfahren nach Anspruch 1 oder 2, wobei das Antwortgeberentdeckungsprotokoll das aktive Scanantwortgeberentdeckungsprotokoll ist, ferner Folgendes umfassend:

Übertragen einer Sondierungsanforderungs(PR)-Nachricht durch die Station;
Empfangen einer Sondierungsantwort(PRR)-Nachricht, die vom Antwortgeber übertragen wurde, durch die Station; und
Übertragen einer PRR-Bestätigung durch die Station.

**4.** Verfahren nach Anspruch 1, wobei die SR-Nachricht eine Sondierungsanforderungs(PR)-Nachricht ist und wobei die SRR-Nachricht eine ACK-Nachricht ist und wobei das Antwortgeberentdeckungsprotokoll das aktive Scanantwortgeberentdeckungsprotokoll ist, ferner Folgendes umfassend:

Empfangen einer Sondierungsantwort(PRR)-Nachricht, die vom Antwortgeber übertragen wurde, durch die Station; und
Übertragen einer PRR-Bestätigung durch die Station.

**5.** Verfahren nach Anspruch 1, 2, 3 oder 4, wobei die SRR-Nachricht vom Antwortgeber nur übertragen wird, wenn der Antwortgeber mit Eigenschaften übereinstimmt, die durch eine organisatorisch eindeutige Kennung, OUI, die in der SR-Nachricht bereitgestellt ist, bestimmt werden.

**6.** Verfahren nach Anspruch 1, 2, 3, 4 oder 5, wobei die SRR-Nachricht vom Antwortgeber unter Verwendung eines Codierungsauswahlschemas, das auf der Identität des Antwortgebers basiert, übertragen wird.

**7.** Verfahren nach Anspruch 1, 2, 3, 4, 5 oder 6, wobei das Codierungsschema aus der Gruppe ausgewählt ist, die aus einem vorbestimmten Codierungsschema und einem Codierungsschema, das dem Antwortgeber von die Station bereitgestellt wird, besteht.

**8.** Verfahren nach Anspruch 1, 2, 3, 4, 5, 6 oder 7, wobei die SRR-Nachricht vom Antwortgeber in nicht mehr als ungefähr einem kurzen Zwischenrahmenschlitz(SIFS)-Zeitrahmen ab Empfang der SR Nachricht durch den Antwortgeber übertragen wird.

**9.** Drahtlose Kommunikationsvorrichtung (700), die Folgendes umfasst:

eine Verarbeitungsschaltung (704) zum Detektieren eines Antwortgebers (208, 210: 610, 612: 702), die angepasst ist, Zugang zu einem Netzwerk bereitzustellen, wobei die Verarbeitungsschaltung (704) zu Folgendem angeordnet ist:

Übertragen einer Scananforderungs(SR)-Nachricht;
Detektieren einer SR-Antwort(SRR)-Nachricht,
wobei die SRR-Nachricht Identitäts- oder andere Informationen, die Eigenschaften des Antwortgebers anzeigen, umfasst; und, nach Detektion der SRR-Nachricht, Auswählen eines Antwortgeberentdeckungsprotokolls durch Empfangen einer Verbindungsinitiierungsprotokollnachricht, die aus der Gruppe ausgewählt ist, die aus einer Nachricht, die vom Antwortgeber als Teil eines aktiven Scanverbindungsinitiierungsprotokolls gesendet wird, und einer Nachricht, die vom Antwortgeber als Teil eines passiven Scanverbindungsinitiierungsprotokolls gesendet wird, besteht,
wobei die Auswahl eines Antwortgeberentdeckungsprotokolls vom Inhalt der SRR-Nachricht abhängig ist.

**10.** Vorrichtung nach Anspruch 9, wobei die SRR-Nachricht Folgendes umfasst
eine PLCP-Präambel und einen PLCP-Header, die jeweils allen Antwortgebern gemein sind, und eine eindeutige Nutzlast, die unter Verwendung von orthogonalen Codes codiert ist, die auf einem Schema basieren, das aus einer Gruppe ausgewählt ist, die aus einem vordefinierten orthogonalen Codeauswahlschema und einem orthogonalen Codeauswahlschema, das als Teil der SR-Nachricht übertragen wird, besteht.

**11.** Vorrichtung nach Anspruch 9 oder 10, wobei die Verarbeitungsschaltung, die dazu ausgelegt ist, die SRR-Nachricht zu detektieren, ein Zeitteilungsempfangsschema umfasst, um dem Antwortgeber mehrere Auswahlen bereitzustellen, die SRR-Nachricht übertragen, wobei das Zeitteilungsempfangsschema aus der Gruppe ausgewählt ist, die aus einem vorbestimmten Zeitteilungsempfangsschema und einem Zeitteilungsempfangsschema, das dem Antwortgeber von der Station bereitgestellt wurde, besteht.

**12.** Vorrichtung nach Anspruch 9 oder 10, wobei die SRR-Nachricht vom Antwortgeber unter Verwendung eines Gelegenheitsauswahlschemas, das auf der Identität des Antwortgebers basiert, übertragen wird, wobei das Gelegenheitsauswahlschema aus der Gruppe ausgewählt ist, die aus einem vorbestimmten Gelegenheitsauswahlschema und einem Gelegenheitsauswahlschema, das dem Antwortgeber von der Station bereitgestellt wurde, besteht.

**13.** Computerspeichermedium, auf dem sich ausführbare Anweisungen befinden, die, wenn sie ausgeführt werden, eine Teilnehmereinrichtung, UE (700), zu Folgendem auslegen:

Senden einer Scananforderungs(SR)-Nachricht und

Detektieren einer SR-Antwort(SRR)-Nachricht, wobei die SRR-Nachricht mindestens die Existenz des Antwortgebers identifiziert,

wobei die SRR-Nachricht Identitäts- oder andere Informationen, die Eigenschaften des Antwortgebers anzeigen, umfasst; und, nach Detektieren der SRR-Nachricht, Auswählen eines Antwortgeberentdeckungsprotokolls durch Empfangen einer Verbindungsinitiierungsprotokollnachricht, die vom Antwortgeber als Teil eines aktiven Scanantwortgeberentdeckungsprotokolls oder eines passiven Scanantwortgeberentdeckungsprotokolls übertragen wird,

wobei die Auswahl eines Antwortgeberentdeckungsprotokolls vom Inhalt der SRR-Nachricht abhängig ist.

## Revendications

1. Procédé destiné à établir une liaison initiale vers un point d'accès comprenant :

   la transmission, par une station, d'un message de demande de balayage, SR, (205),
   la détection, par la station, d'un message de réponse à la demande SR, SRR, (212, 214), dont la réception indique l'existence d'un dispositif de réponse approprié,
   dans lequel le message de réponse SRR comprend une identité ou d'autres informations indiquant des caractéristiques du répondeur,
   l'entrée, par la station, à la détection de la réception du message de réponse SRR, dans un protocole de recherche de répondeur sélectionné à partir du groupe constitué d'un protocole actif de recherche de répondeur par balayage et d'un protocole passif de recherche de répondeur par balayage,
   dans lequel la sélection d'un protocole de recherche de répondeur dépend du contenu du message de réponse SRR.

2. Procédé selon la revendication 1, dans lequel le message de demande SR est un message de demande de balayage rapide, RSR, et où le message de réponse SRR est un message de réponse à une demande RSR, RSRR.

3. Procédé selon la revendication 1 ou la revendication 2, dans lequel le protocole de recherche de répondeur est un protocole actif de recherche de répondeur par balayage comprenant en outre :

   la transmission, par la station, d'un message de demande de sondage, PR,
   la réception, par la station, d'un message de réponse de sondage, PRR, transmis par le répondeur, et
   la transmission, par la station, d'un accusé de réception au message de réponse PRR.

4. Procédé selon la revendication 1, dans lequel le message de demande SR est un message de demande de sondage, PR, et dans lequel le message de réponse SRR est un message d'accusé de réception ACK, et dans lequel le protocole de recherche de répondeur est le protocole actif de recherche de répondeur par balayage comprenant en outre :

   la réception, par la station, d'un message de réponse de sondage, PRR, transmis par le répondeur, et
   la transmission, par la station, d'un accusé de réception au message de réponse PRR.

5. Procédé selon les revendications 1, 2, 3 ou 4, dans lequel le message de réponse SRR est transmis par le répondeur uniquement si le répondeur correspond aux caractéristiques déterminées par un identificateur unique organisationnel, OUI, fournis dans le message de demande SR.

6. Procédé selon les revendications 1, 2, 3, 4 ou 5, dans lequel le message de réponse SRR est transmis par le répondeur en utilisant un schéma de sélection de codage fondé sur l'identité du répondeur.

7. Procédé selon les revendications 1, 2, 3, 4, 5 ou 6,
   dans lequel le schéma de codage est sélectionné à partir du groupe constitué d'un schéma de codage prédéterminé et d'un schéma de codage fourni au répondeur par la station.

8. Procédé selon les revendications 1, 2, 3, 4, 5, 6 ou 7, dans lequel le message de réponse SRR est transmis par le répondeur dans une trame de temps de tranche inter-trames courte, SIFS, environ et pas plus à partir de la réception du message de demande SR par le répondeur.

**9.** Dispositif de communication sans fil (700) comprenant :

des circuits de traitement (704) permettant de détecter un répondeur (208, 210 : 610, 612: 702) conçu pour fournir un accès à un réseau, les circuits de traitement (704) étant agencés pour :

transmettre un message de demande de balayage, SR,
détecter un message de réponse à la demande SR, SRR,
dans lequel le message de réponse SRR comprend une identité ou d'autres informations indiquant des caractéristiques du répondeur ; et, lors de la détection du message de réponse SRR, pour sélectionner un protocole de recherche de répondeur en recevant un message de protocole d'initiation de liaison sélectionné à partir du groupe constitué d'un message envoyé par le répondeur sous forme de partie d'un protocole actif d'initiation de liaison par balayage et d'un message envoyé par le répondeur sous forme de partie d'un protocole passif d'initiation de liaison par balayage,
dans lequel la sélection d'un protocole de recherche de répondeur dépend du contenu du message de réponse SRR.

**10.** Dispositif selon la revendication 9, dans lequel le message de réponse SRR comprend un préambule PLCP et un en-tête PLCP, chacun étant commun à tous les répondeurs, ainsi qu'une charge utile unique codée en utilisant des codes orthogonaux fondés sur un schéma sélectionné à partir d'un groupe constitué d'un schéma prédéfini de sélection de code orthogonal et d'un schéma de sélection de code orthogonal transmis en tant que partie du message de demande SR.

**11.** Dispositif selon la revendication 9 ou la revendication 10, dans lequel les circuits de traitement, configurés pour détecter le message de réponse SRR, comprennent un schéma de réception par répartition dans le temps pour fournir de multiples choix pour que le répondeur transmette le message de réponse SRR, le schéma de réception par répartition dans le temps étant sélectionné à partir du groupe constitué d'un schéma prédéterminé de réception par répartition dans le temps et d'un schéma de réception par répartition dans le temps procuré au répondeur par la station.

**12.** Dispositif selon la revendication 9 ou la revendication 10, dans lequel le message de réponse SRR est transmis par le répondeur en utilisant un schéma de sélection d'opportunité fondé sur l'identité du répondeur, le schéma de sélection d'opportunité étant sélectionné à partir du groupe constitué d'un schéma prédéterminé de sélection d'opportunité et d'un schéma de sélection d'opportunité procuré au répondeur par la station.

**13.** Support de stockage sur ordinateur comportant des instructions exécutables intégrées sur celui-ci qui, lorsqu'elles sont exécutées, configurent un équipement utilisateur, UE, (700) à :

envoyer un message de demande de balayage, SR, et
détecter un message de réponse à la demande SR, SRR, le message de réponse SRR identifiant au moins l'existence d'un répondeur,
dans lequel le message de réponse SRR comprend une identité ou d'autres informations indiquant des caractéristiques du répondeur ; et à sélectionner un protocole de recherche de répondeur, lors de la détection du message de réponse SRR, en détectant un message de protocole d'initiation de liaison transmis par le répondeur comme partie d'un protocole actif de recherche de répondeur à balayage ou d'un protocole passif de recherche de répondeur par balayage,
dans lequel la sélection d'un protocole de recherche de répondeur dépend du contenu du message de réponse SRR.

*Fig. 1*

Fig. 2

*Fig. 3*

*Fig. 4*

*Fig.5*

*Fig.6*

EP 2 873 275 B1

EP 2 873 275 B1

STATION 700 ~ 204, 604

PROCESSOR 704

INSTRUCTIONS 706

MEMORY 708

INSTRUCTIONS 710

TRANSCEIVER 712

RESPONDER 702 ~ 208, 210, 610, 612

PROCESSOR 714

INSTRUCTIONS 716

MEMORY 718

INSTRUCTIONS 700

TRANSCEIVER 722

*Fig. 7*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008026810 A1
- US 2011045771 A1
- US 2007097940 A1
- US 2009268711 A1